# FASCICULE DE BREVET EUROPEEN

(11) **EP 0 352 691 B1**
(45) Date de publication et mention de la délivrance du brevet: **13.01.1993**
(21) Numéro de dépôt: 89113561.8
(22) Date de dépôt: 24.07.1989
(51) Int. Cl.: G01N 21/07

(54) **Dispositif pour la réalisation d'analyses biologiques par réaction chimique sur un sérum**
Vorrichtung für biologische Analysen mittels einer chemischen Serum-Reaktion
Device for biological analyses by serum chemical reaction

(30) Priorité: 28.07.1988 FR 8810212
(43) Date de publication de la demande: 31.01.1990
(73) Titulaire: Guigan, Jean, F-75005 Paris (FR)
(72) Inventeur: Guigan, Jean, F-75005 Paris (FR)
(74) Mandataire: Weinmiller, Jürgen

(56) Documents cités:
- FR-A- 2 351 022
- US-A- 3 497 320
- US-A- 4 387 922

## Description

La présente invention concerne un dispositif pour la réalisation d'analyses biologiques par réaction chimique sur un sérum.

De manière générale, on opère en introduisant dans une cuve à réaction une certaine quantité d'échantillon de sérum à l'aide d'une pipette manuelle ou automatique. Puis on ajoute à l'aide d'une pipette, un, deux ou trois réactifs ou diluants selon l'analyse, en partant de flacons contenant lesdits réactifs. Ceci nécessite à chaque fois le rinçage des pipettes et de nombreuses manipulations de flacons de réactifs.

La présente invention a pour but d'éviter cet inconvénient et de proposer un dispositif de faible encombrement permettant à un opérateur d'effectuer aisément et rapidement un grand nombre d'analyses différentes.

La présente invention a pour objet un dispositif pour la réalisation d'analyses biologiques par réaction chimique sur un sérum caractérisé par le fait qu'il comporte un dispositif de traitement simultané d'une pluralité de cartouches comprenant :
- un moyeu associé à un moteur à codeur angulaire permettant la gestion des cycles de rotation et susceptible d' imprimer audit moyeu un mouvement rapide pour une centrifugation ou un mouvement lent pas à pas,
- une pluralité d'ascenseurs porte-cartouche fixés radialement sur le moyeu et des moyens pour les faire passer chacun d'une position haute de chargement d'une cartouche à une position basse de travail, chacun de ces ascenseurs présentant une face périphérique ouverte, une face supérieure et une face inférieure très échancrées, chaque ascenseur comprenant des moyens débrayables pour bloquer radialement sa cartouche en cas de centrifugation,
- une pluralité de calibres de lecture fixés audit moyeu au droit respectivement des faces périphériques desdits ascenseurs,
   dispositif caractérisé également par le fait que chaque cartouche de forme générale rectangulaire comprend :
   - un sachet souple en matière plastique à trois compartiments destinés à contenir chacun un réactif ou un diluant, l'un desdits compartiments, appelé compartiment d'analyse, étant relié d'une part à une extrémité libre du sachet par un canal obturé par un opercule fragilisé et d'autre part aux deux autres compartiments de stockage de réactif respectivement par deux conduits à fermeture fragilisée,
   - un fond rectangulaire préformé en matière plastique pour recevoir ledit sachet et muni en outre d'une cuve de stockage de sérum, ledit canal dudit sachet aboutissant dans ladite cuve,
   - un couvercle fermant ledit fond, mais présentant comme ce fond une ouverture laissant visible une grande partie dudit compartiment d'analyse,

ledit dispositif de traitement comprenant au moins un module périphérique de lecture situé sur la trajectoire desdits calibres, un module situé au-dessus de la trajectoire desdits compartiments d'analyse et de stockage de réactif, et muni de moyens de rupture dudit opercule fragilisé et desdits conduits à fermeture fragilisée.

De préférence, ledit dispositif de traitement est associé à au moins une pipette de remplissage automatique en sérum des cuves de stockage de sérum desdites cartouches. Il comporte en outre un module de chargement automatique d'une cartouche dans chaque ascenseur ainsi qu'un module de déchargement automatique.

Selon un perfectionnement, ledit dispositif de traitement comporte un module muni de moyens pour s'appliquer contre ledit compartiment d'analyse souple et assurer une homogénéisation des liquides qu'il contient.

Selon un mode de réalisation particulier, chaque calibre de lecture est une pièce transparente présentant sensiblement la forme d'une gouttière de manière à bloquer radialement ledit compartiment d'analyse souple, lesdits moyens de blocage de ladite cartouche dans lesdits ascenseurs étant débrayés, ladite gouttière ayant deux parois latérales horizontales d'écartement calibré contre lesquelles ledit compartiment d'analyse vient se plaquer au cours d'une centrifugation.

A titre d'exemple, ledit sachet est constitué d'une feuille thermoformée en Surlyn (Marque DU PONT DE NEMOURS), pliée en deux et thermosoudée suivant des lignes définissant lesdits compartiments et ledit canal.

Par ailleurs, ledit fond et son couvercle sont réunis latéralement par deux guides qui les pincent entre deux lèvres.

D'autres caractéristiques et avantages de la présente invention apparaîtront au cours de la description suivante d'un mode de réalisation donné à titre illustratif, mais nullement limitatif. Dans le dessin annexé :
- La figure 1 montre en perspective un sachet ouvert à trois compartiments entrant dans la composition d'une cartouche selon l'invention.
- La figure 2 montre en perspective le sachet de la figure 1 en situation fermée.
- La figure 3 est une vue en perspective éclatée d'une cartouche selon l'invention.
- La figure 4 est une vue en coupe partielle transversale montrant un détail d'une cartouche selon l'invention.
- La figure 5 est une vue en coupe partielle longitudinale du compartiment d'analyse de la cartouche selon l'invention.
- La figure 6 est une vue schématique en élévation de la cartouche de la figure 3 complètement montée.
- La figure 7 est une vue schématique latérale longitudinale de la cartouche de la figure 6.
- La figure 8 est une vue schématique latérale transversale de la cartouche de la figure 6.
- La figure 9 correspond à la figure 6 encore plus schématisée (cf figures 16 à 21).
- La figure 10 est une vue schématique de dessus du dispositif de traitement des cartouches précédentes.
- La figure 11 est une vue schématique en coupe selon la ligne XI-XI de la figure 10.
- La figure 12 est une vue schématique en perspective d'un ascenseur porte-cartouche appartenant au dispositif des figures 10 et 11.
- La figure 13 est une vue latérale schématique d'un premier système de rappel de cartouche appartenant à l'ascenseur porte-cartouche de la figure 12.
- La figure 14 est une vue latérale schématique d'un second système de rappel de cartouche appartenant à l'ascenseur porte-cartouche de la figure 12.
- La figure 15 est une vue schématique en perspective d'un module appartenant au dispositif de traitement précédent.
- Les figures 16 à 21 montrent schématiquement les différenes étapes d'une réaction qui se produit dans une cartouche selon l'invention.

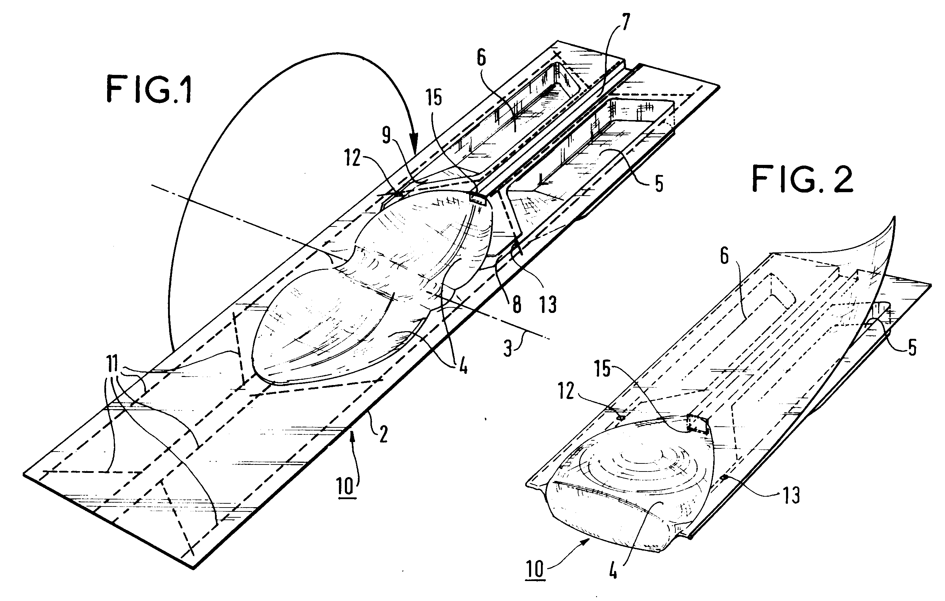

On a illustré dans les figures 1 et 2 respectivement en positions ouverte et fermée un sachet souple 10 à trois compartiments destinés à contenir des réactifs ou des diluants. La plupart des analyses peuvent être effectuées avec moins de trois réactifs. Selon les cas, au moins un compartiment du sachet 10 pourra être vide. Ce sachet 10 est réalisé à partir d'une feuille rectangulaire de matière plastique 2 très mince, repliée en son milieu suivant l'axe 3.

La feuille 2 est thermoformée de manière à définir :
- un compartiment d'analyse 4 situé à une extrémité du sachet 10 et susceptible de communiquer avec l'extérieur au niveau de l'autre extrémité par un canal 7, lorsqu'on opercule fragilisé 15 qui le ferme est rompu,
- deux compartiments de stockage de réactifs 5 et 6 susceptibles d'être mis en communication avec le compartiment d'analyse 4 respectivement par deux conduits 8 et 9.

Le thermosoudage des deux moitiés de la feuille 2 s'effectue suivant un réseau de lignes 11 représentées en pointillés dans la figure 1. Au niveau des zones 12 et 13, le thermosoudage entraîne une obstruction au moins partielle des conduits 8 et 9 en créant des soudures fragilisées.

Avant la fermeture totale des différents compartiments, on y a introduit en usine les réactifs ou diluants adaptés à une analyse donnée.

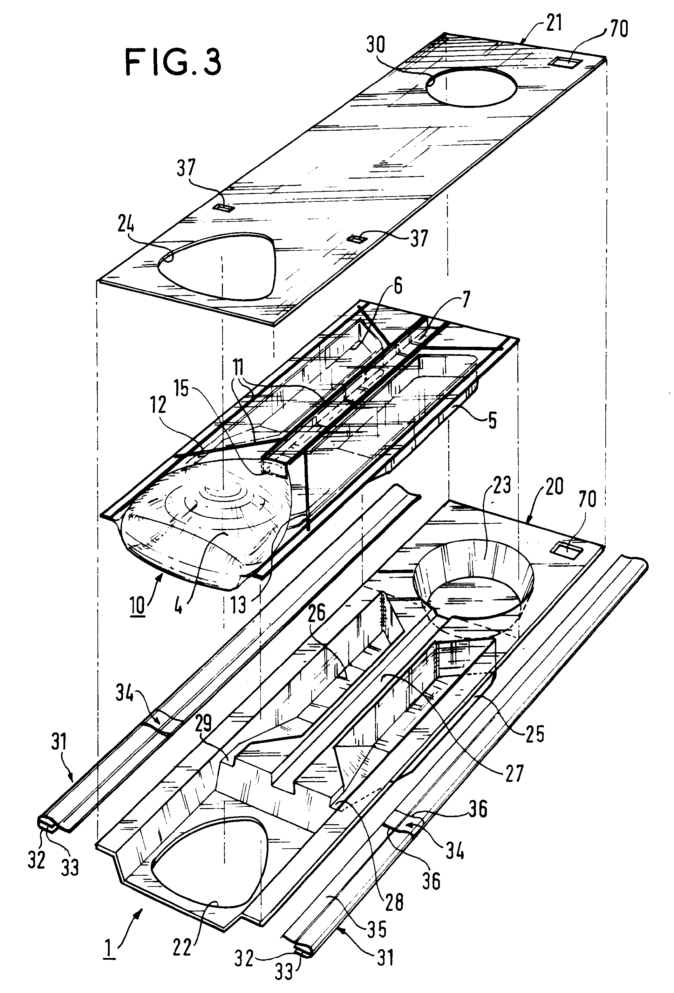

Le sachet 10 ainsi préparé est illustré dans la figure 3. Il est trop souple pour être utilisé directement dans un dispositif de traitement. C'est pourquoi on l'associe à un fond 20 et à un couvercle 21 en matière plastique mince mais relativement rigide de manière à réaliser une cartouche d'analyse 1. Le fond 20 et son couvercle sont notablement plus longs que le sachet 10. Le fond 20 est thermoformé de manière à épouser la forme des différents compartiments 5, 6 et du canal 7. Ainsi on retrouve des cuves 25 et 26 correspondant aux compartiments 5 et 6, un canal 27 correspondant au canal 7, et des conduits 28 et 29 correspondant aux conduits 8 et 9.

Le fond 20 présente en outre une ouverture 22 au droit d'une portion du compartiment d'analyse 4 et une cuve de stockage de sérum 23 communiquant avec le canal 27. Le couvercle plan 21 présente une ouverture 24 analogue à l'ouverture 22 du fond 20 et une ouverture 30 permettant l'accès à la cuve de stockage de sérum 23.

Le fond 20 et le couvercle 21 sont solidarisés par exemple par l'intermédiaire de deux guides latéraux 31 qui les pincent entre deux lèvres parallèles 32 et 33.

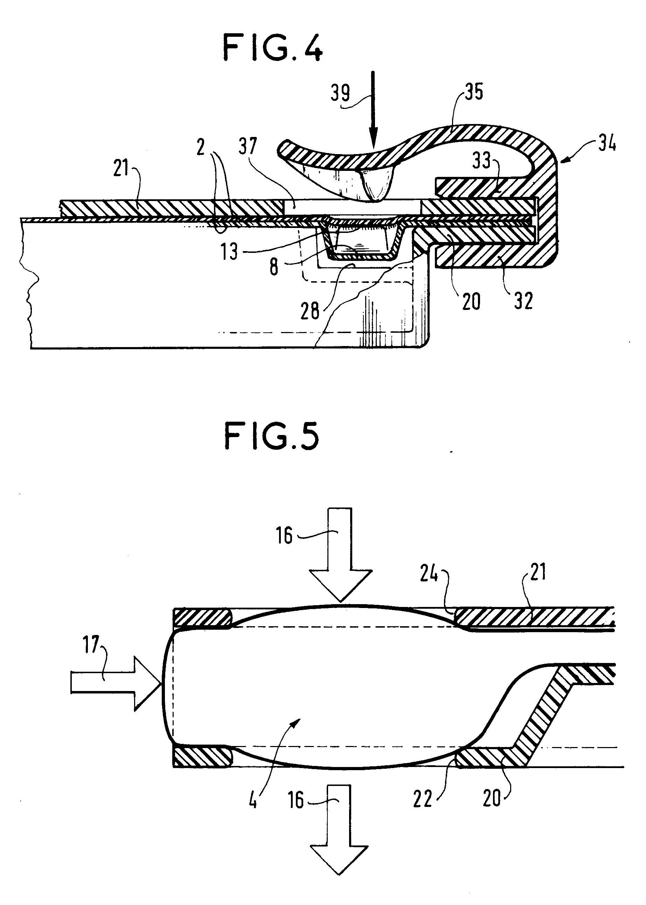

Ces guides présentent au niveau d'une zone 34 située au droit des conduits 9 et 8 à soudures fragilisées 12 et 13 un moyen de destruction de ces soudures, plus visible dans la figure 4. La paroi supérieure 35 du guide 31 est partiellement désolidarisée suivant la zone 34 grâce à deux coupures 36 et peut, à travers une ouverture 37 pratiquée dans le couvercle 21, être appliquée dans la direction de la flèche 39 sur la soudure fragilisée 13 de manière à la rompre et à réouvrir ainsi le conduit 8.

On voit dans la figure 5 très schématiquement en coupe longitudinale et à l'échelle agrandie le compartiment d'analyse 4 du sachet 10 à parois transparentes et qui peut être observé suivant la direction des flèches 16 ou 17 par tout dispositif de lecture adapté.

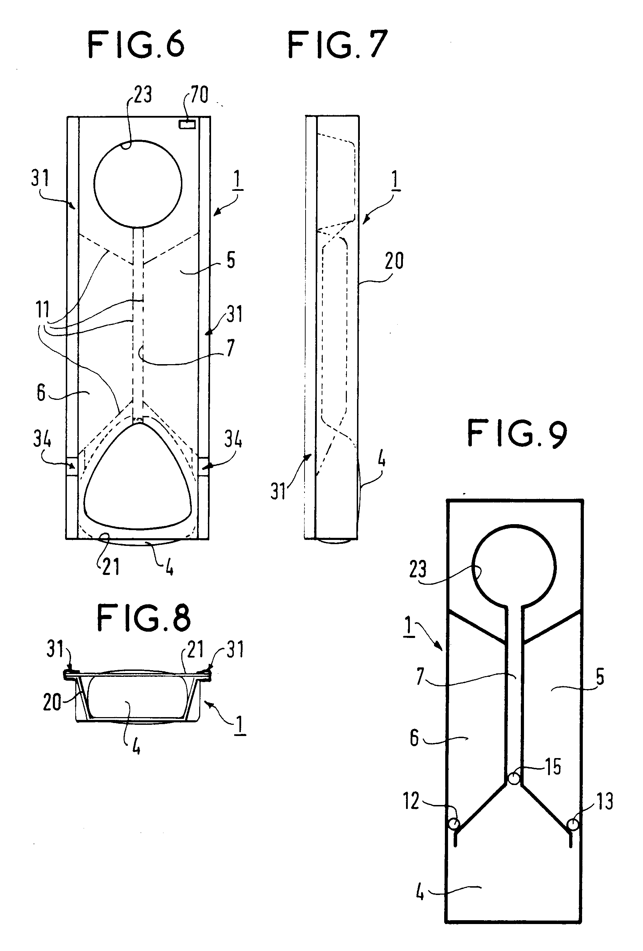

Les figures 6 à 8 montrent schématiquement suivant trois faces la cartouche 1 de la figure 3 entièrement montée et prête à l'emploi.

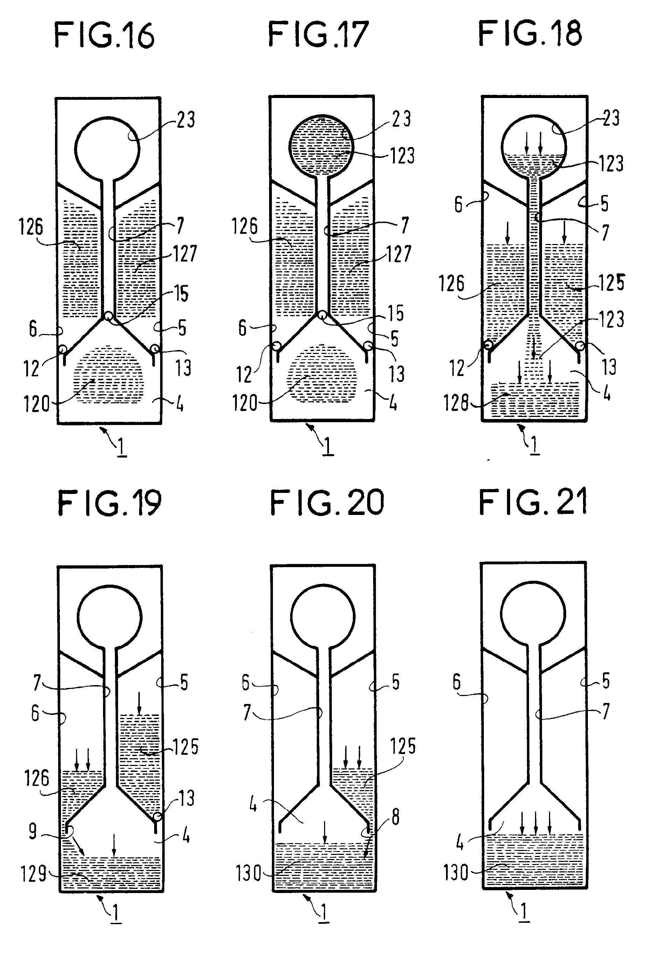

La figure 9 est un schéma de cette cartouche nécessaire à l'explication de son fonctionnement, qui sera donné plus loin à l'aide des figures 16 à 21.

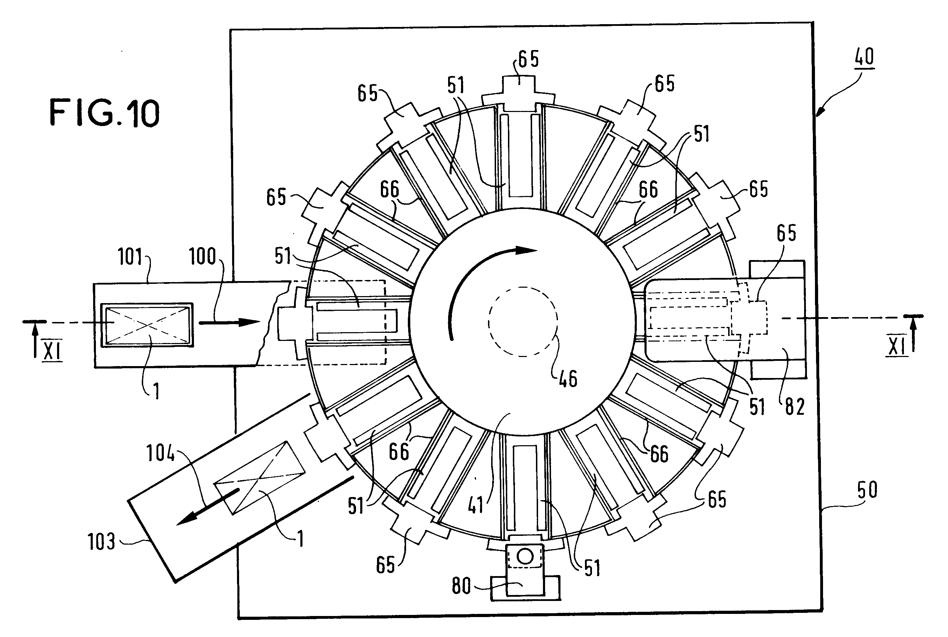

La cartouche 1 précédemment définie, munie de ses moyens d'identification, est traitée dans un dispositif 40 illustré à l'aide des figures 10 à 15 qui constitue un mini-laboratoire. Il se présente sous la forme générale d'un boîtier parallélépipédique 50 dont la base a, par exemple, pour dimensions transversales 300 mm x 300 mm et pour hauteur 200 mm environ.

Ce dispositif de traitement peut éventuellement être placé dans une enceinte thermostatée.

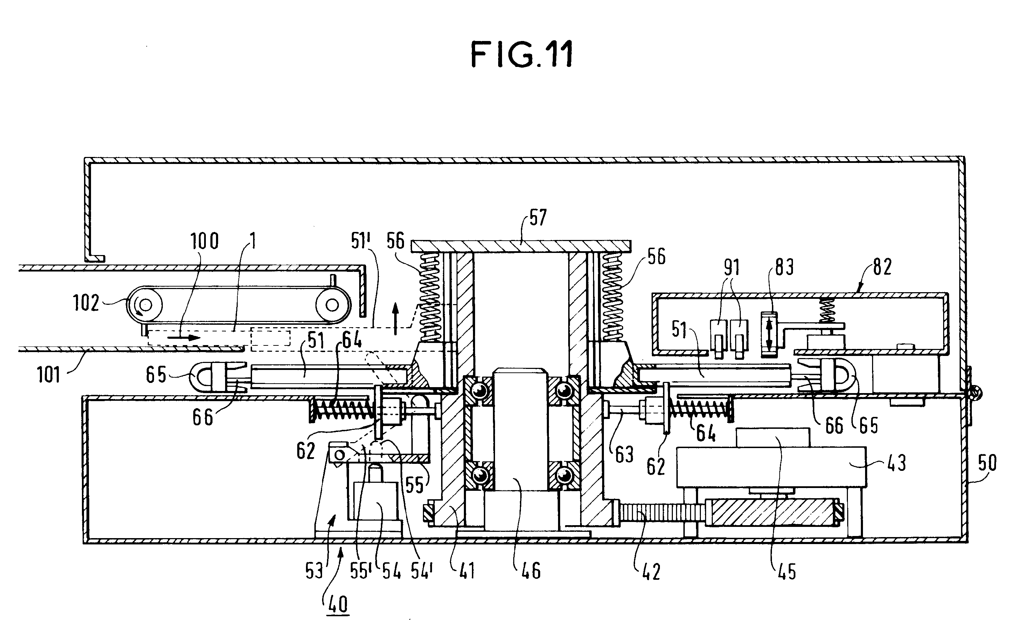

Les principaux sous-ensembles de ce dispositif 40 sont les suivants (cf figures 10 et 11) :
Un moyeu 41 être entraîné en rotation autour d'un axe 46 par un moteur 43 avec un système de transmission schématisé 42 comportant une courroie crantée et deux pignons à dents. Il s'agit d'un moteur à courant continu associé à un codeur angulaire 45 permettant la gestion des cycles de rotation.

Le moyeu 41 est solidarisé à douze ascenseurs porte-cartouche tels que 51, répartis régulièrement radialement autour de lui. Chaque ascenseur porte-cartouche 51 est associé à un système de commande 53, destiné à faire passer l'ascenseur porte-cartouche 51 d'une position 51′ levée illustrée en pointillés, à une position basse illustrée en traits pleins. Le système de commande 53 peut être constitué d'un électro-aimant commandable 54 associé à un levier 55. On a illustré en pointillés les positions 54′ et 55′ de l'électro-aimant et du levier correspondant à la position 51′ de l'ascenseur porte-cartouche 51. Des ressorts de rappel 56 sont prévus entre les ascenseurs 51 et la face supérieure 57 du moyeu 41.

Quand l'ascenseur est en position 51′, on peut y introduire manuellement une cartouche 1 suivant la flèche 100 comme indiqué dans la figure 10 ; de préférence cette introduction est effectuée par un module de chargement automatique 101 (avec entraînement schématisé 102). De même un module de déchargement automatique 103 dans la direction schématisée par la flèche 104 est illustré dans la figure 10.

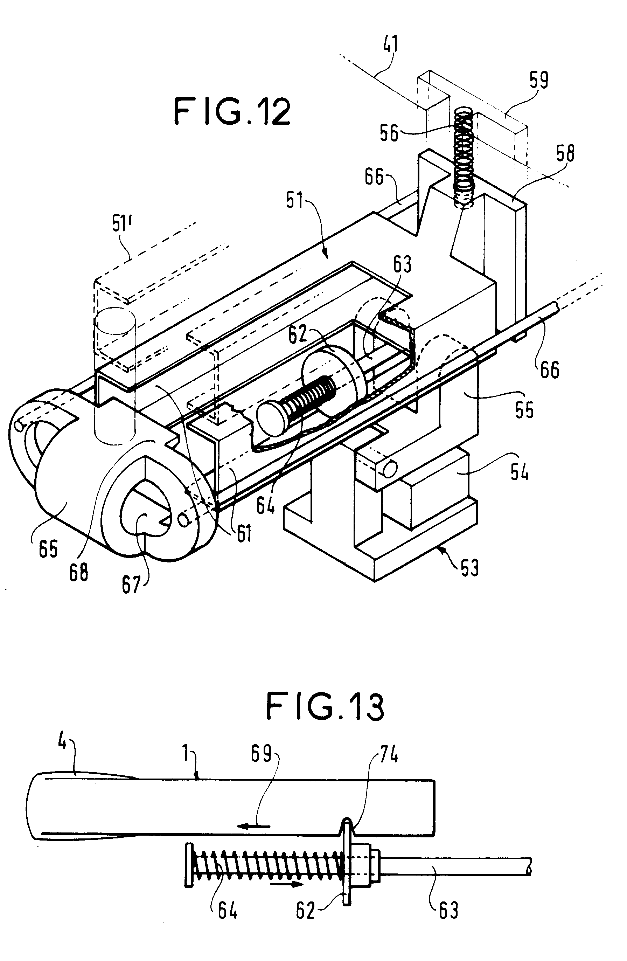

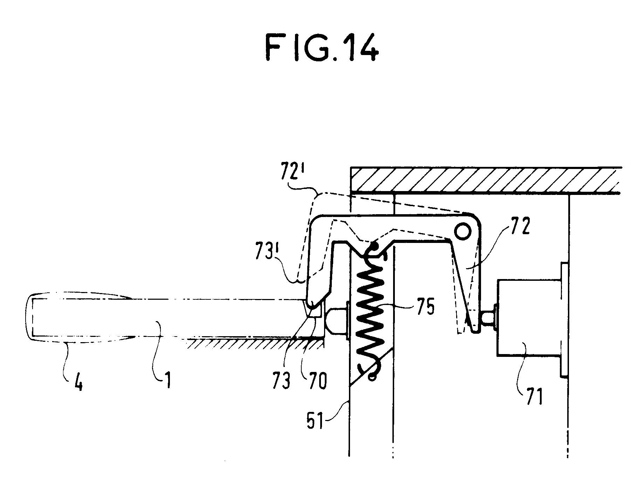

On voit plus précisément dans la figure 12 un ascenseur 51 présentant une partie en T 58 guidée dans une rainure correspondante 59 du moyeu 41. Du côté opposé, l'ascenseur 51 a sa face d'entrée ouverte, et sur ses parties latérales il est formé de rails 61 à section en U, sa face supérieure étant également largement ouverte. Il en est de même pour son fond d'où dépasse un disque 62 d'indexation de cartouche, susceptible de coulisser sur une tige 63 solidaire du moyeu 41 et coopérant avec un ressort de rappel 64 bien visible dans la figure 13. On voit également dans cette figure une encoche 74 prévue dans la cartouche 1 où s'introduit le disque 62. Ce système est susceptible d'entraîner la cartouche 1 vers la face de sortie de l'ascenseur 51 dans le sens de la flèche 69. Au contraire le système, illustré dans la figure 14 et coopérant avec un orifice 70 de la cartouche 1, est destiné à la retenir vers le centre du moyeu 41 quand il est dans la position illustrée en traits pleins. Il s'agit d'un bras mobile 72 associé à un ressort de rappel 75 et actionné par un électro-aimant commandable 71. Le bras 72 peut passer à la position 72′ et son extrémité 73 insérée dans l'orifice 70 passe alors en 73′ et quitte cet orifice. La cartouche 1 est alors prise en charge par le système de la figure 13 qui la guide radialement vers la périphérie du dispositif 40.

Sur la partie périphérique du dispositif 40 et au droit de chaque face d'entrée d'un ascenseur 51, est disposé un calibre de lecture optique 65 solidarisé au moyeu 41, par exemple par l'intermédiaire de tiges 66 (voir figures 10 à 12). Chaque calibre 65 est une pièce sensiblement en forme de gouttière ajourée avec un intervalle parfaitement calibré entre les parois latérales 67 et 68 (cf figure 12). Il s'agit par exemple d'une pièce injectée en polycarbonate, parfaitement transparente.

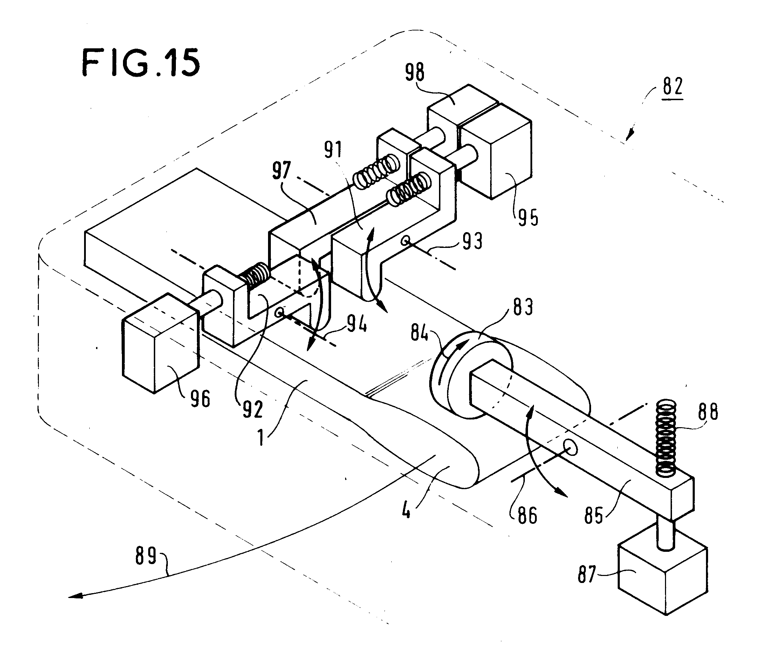

On a schématisé dans la figure 10 un module 80 destiné à la lecture des réactions par colorimétrie ou luminescence ou autre méthode adaptée, à travers les calibres 65.
Dans cette figure apparaît également un module 82 illustré plus en détail dans la figure 15. Ce module comporte tout d'abord une roulette 83, mobile selon le sens de la flèche 84, et solidaire d'un bras 85 mobile en rotation autour d'un axe 86 permettant un escamotage de la roulette 83. Le bras est commandé par un électro-aimant 87 et un ressort de rappel 88 fixé au module 82. La roulette 83 se situe au droit de la trajectoire 89 du compartiment de réaction 4. Sa fonction est, au cours d'une opération de centrifugation, d'écraser une portion du compartiment 4 pour déplacer le liquide qu'il contient, le laisser revenir ensuite etc... de manière à l'homogénéiser.

Le module 82 comporte également des marteaux 91 et 92 rendus mobiles en rotation respectivement autour des axes 93 et 94 par des électro-aimants 95 et 96. Ces marteaux sont situés au droit des soudures fragilisées 12 et 13 et plus précisément au droit des zones 34 des guides 31 définis plus haut. Leur mise en oeuvre permet d'appuyer sur ces zones et d'ouvrir les conduits 8 et 9 du sachet 10. Un marteau 97 analogue aux précédents est prévu au droit de l'opercule fragilisé 15. Sa mise en oeuvre commandé par un électro-aimant 98 assure la rupture de cet opercule.

On va décrire ci-dessous à l'aide des figures 16 à 21 les différentes phases de mise en oeuvre d'une cartouche 1 dans le dispositif de traitement 40.

Lorsque l'on introduit la cartouche 1 par l'intermédiaire du module de chargement automatique 101 dans un ascenseur porte-cartouche en position 51′ (figure 11), elle est dans l'état illustré dans les figures 6 à 8 avec son sachet de réactifs adaptés à l'analyse à effectuer. On a référencé trois réactifs 126, 127, 120, mais bien entendu au moins l'un d'entre eux peut être un diluant, et au moins un des compartiments peut être vide selon le type d'analyse envisagé.

Au moment de son chargement la cartouche 1 se trouve mise en place vis-à-vis des systèmes illustrés dans les figures 13 et 14 grâce à son orifice 70 et à son encoche 74 (figure 13).

Lorsque l'ascenseur porte-cartouche est revenu en position 51, le moteur 43 fait tourner le moyeu 41 d'un douzième de tour afin que la cartouche suivante puisse être chargée (figures 10 et 11). Au cours de l'opération de chargement de la seconde cartouche, il est avantageux d'introduire du sérum 123 dans la cuve de stockage de sérum 23 de la première cartouche (cf figure 17). Ceci peut être fait automatiquement, par exemple en utilisant la pipette décrite dans le brevet français du demandeur n° 87 15688.

Lorsque l'ensemble des cartouches est chargé, on effectue une opération de destruction de l'opercule fragilisé 15 obturant le canal 7 du sachet 10 par passage de la cartouche 1 au niveau du module 82, et mise en oeuvre du marteau 97. Puis on effectue une centrifugation de manière à faire passer le sérum 123 par le canal 7 dans le compartiment d'analyse 4 (cf figure 18). On a alors dans ce compartiment un mélange 128.

La cartouche 1 repasse au niveau du module 82 afin de briser la soudure fragilisée 12 et de libérer le conduit 9, par action du marteau 92 sur la zone 34 correspondante de la cartouche (cf figures 15 et 4). On effectue une nouvelle centrifugation pour faire passer le réactif 126 du compartiment 6 vers le compartiment d'analyse 4 (cf figure 19). On a alors dans ce compartiment un mélange 129.

Par une opération identique à celle qui a été réalisée au niveau de la soudure 12, on brise la soudure fragilisée 13 par passage de la cartouche 1 sous le module 82 et action du marteau 91. Le conduit 8 est alors libéré. On effectue une autre centrifugation pour faire passer le réactif 125 dans le compartiment d'analyse 4 (voir figures 20 et 21) ; on a alors dans ce compartiment un mélange 130. Il va être homogénéisé par passage de la cartouche 1 sous le module 82 et mise en oeuvre de la molette tournante 83. La cartouche est alors prête à être lue.

L'électro-aimant de la figure 14 va agir sur le bras 72 qui va passer en position 72′ pour libérer la cartouche 1 rappelée alors vers la périphérie du dispositif par le ressort 64 de la figure 13. Sous l'effet de la centrifugation, le compartiment d'analyse 4 (cf figure 5) partiellement rempli de liquide 130 va venir se bloquer contre les parois planes d'écartement calibré 67 et 68 du calibre 65 qui lui est associé (cf figure 12). Une mesure par colorimétrie ou luminescence ou autre, sera effectuée au passage de la cartouche 1 sous le module de mesure 80. Il en résultera la valeur du produit à doser dans le sérum.

L'ensemble des opérations du dispositif 40 est piloté par un microprocesseur ou un ordinateur programmé.

A titre d'exemple une cartouche présente les dimensions suivantes :
Longueur : de l'ordre de 50 mm
Largeur : de l'ordre de 15 mm
Hauteur : de l'ordre de 5 à 6 mm.
Les quantités de sérum et de réactifs utilisés sont de l'ordre d'une dizaine à quelques centaines de microlitres. Des analyses peuvent être effectuées sur des quantités de sérum très réduites, de l'ordre de quelques microlitres, compte tenu de la précision des mesures rendue possible avec les pipettes actuelles. Le sachet souple est de préférence réalisé en Surlyn (marque DU PONT DE NEMOURS), d'épaisseur 40 micromètres. Le fond et le couvercle sont par exemple en polystyrène.

Pour la commodité du dessin, on a illustré douze ascenseurs porte-cartouche, mais les dimensions mentionnées permettent d'en loger dix-huit, ce nombre n'étant également qu'un exemple de mise en oeuvre.

Le dispositif selon l'invention permet à l'opérateur d'avoir en stock dans un magasin quelques dizaines de cartouches correspondant à chacune des analyses qu'il doit faire habituellement. La mise en oeuvre du dispositif de traitement 40 lui permet d'effectuer automatiquement toutes les opérations nécessaires à l'analyse chimique de sérum.

On donne ci-dessous quelques exemples d'analyses.

### Exemple I : Analyse à un seul réactif : dosage de la créatinine urinaire.

On utilise 10 à 25 microlitres d'échantillon. Le réactif est de type CPK (créatine phosphokinase), LDH (lacto- deshydrogénase). Après un temps fonction du réactif, le module de lecture, à une longueur d'onde donnée, donne le résultat.

### Exemple II : Analyse à deux réactifs : dosage de l'acide urique.

On utilise 20 microlitres de sérum.
Le premier réactif (tampon chromogène) présente la composition suivante:
- tampon phosphate pH 7,0 : 150 mmol/l
- acide 3,5 dichloro-2-hydroxy-benzène sulfonique : 2 mmol/l
- agent tensio-actif : 2 mmol/l

On ajoute 500 microlitres. La réaction dure 3 minutes.
Le second réactif (enzymes) présente la composition suivante :
- uricase : ≧ 100 U/l
- peroxydase : ≧ 200 U/l
- amino-4-antipyrine : 0,25 mmol/l

On ajoute 5 microlitres. La réaction dure 3 minutes.
La lecture s'effectue ensuite au photomètre à 340 nanomètres.

### Exemple III : Analyse à trois réactifs LHD (Lacto-deshydrogénase).

On utilise 5 microlitres de sérum.
Le premier réactif (tampon) a la composition suivante :
- tampon tris pH 7,2 : 80 mmol/l
- NaCl : 200 mmol/l

On en introduit 250 microlitres.
Le second réactif (coenzymes NAOH à 0,2 mmol/l) est introduit en quantité de 250 microlitres. Après une minute on introduit le troisième réactif (pyruvate à 1,6 mmol/l) en quantité de 50 microlitres. La réaction est observée pendant ses deux premières minutes.

## Revendications

1. Dispositif pour la réalisation d'analyses biologiques par réaction chimique sur un sérum, caractérisé par le fait qu'il comporte un dispositif de traitement simultané d'une pluralité de cartouches (1) comprenant :
- un moyeu (41) associé à un moteur à codeur angulaire (43) permettant la gestion des cycles de rotation et susceptible d'imprimer audit moyeu (41) un mouvement rapide pour une centrifugation ou un mouvement lent pas à pas,
- une pluralité d'ascenseurs porte-cartouche (51) fixés radialement sur le moyeu (41) et des moyens pour les faire passer chacun d'une position haute (51′) de chargement d'une cartouche (1) à une position basse de travail, chacun de ces ascenseurs présentant une face périphérique ouverte, une face supérieure et une face inférieure très échancrées, chaque ascenseur comprenant des moyens débrayables pour bloquer radialement sa cartouche en cas de centrifugation,
- une pluralité de calibres de lecture (65) fixés audit moyeu au droit respectivement des faces périphériques desdits ascenseurs, dispositif caractérisé également par le fait que chaque cartouche (1) de forme générale rectangulaire comprend :
- un sachet souple (10) en matière plastique à trois compartiments destinés à contenir chacun un réactif ou un diluant, l'un desdits compartiments, appelé compartiment d'analyse (4) étant relié d'une part à une extrémité libre du sachet par un canal (7) obturé par un opercule fragilisé (15) et d'autre part aux deux autres compartiments de stockage de réactif (5, 6) respectivement par deux conduits à fermeture fragilisée (13, 12),
- un fond rectangulaire préformé (20) en matière plastique pour recevoir ledit sachet et muni en outre d'une cuve de stockage de sérum (23), ledit canal (7) dudit sachet (10) aboutissant dans ladite cuve (23),
- un couvercle (21) fermant ledit fond, mais présentant comme ce fond une ouverture (24) laissant visible une grande partie dudit compartiment d'analyse,
ledit dispositif de traitement comprenant au moins un module périphérique de lecture (80) situé sur la trajectoire desdits calibres, un module (82) situé au-dessus de la trajectoire desdits compartiments d'analyse et de stockage de réactif, et muni de moyens de rupture dudit opercule fragilisé (15) et desdits conduits à fermeture fragilisée (12, 13).

2. Dispositif selon la revendication 1, caractérisé par le fait que ledit dispositif de traitement est associé à au moins une pipette de remplissage automatique en sérum des cuves correspondantes desdites cartouches.

3. Dispositif selon l'une des revendications 1 et 2, caractérisé par le fait que ledit dispositif de traitement comporte en outre un module de chargement automatique (101) d'une cartouche (1) dans chaque ascenseur (51).

4. Dispositif selon l'une des revendications 1 à 3, caractérisé par le fait que ledit dispositif de traitement comporte en outre un module de déchargement automatique (103) des cartouches.

5. Dispositif selon l'une des revendications précédentes, caractérisé par le fait que ledit dispositif de traitement comporte un module muni de moyens (83) pour s'appliquer contre ledit compartiment d'analyse souple (4) et assurer une homogénéisation des liquides qu'il contient.

6. Dispositif selon l'une des revendications précédentes, caractérisé par le fait que chaque calibre de lecture (65) est une pièce transparente présentant sensiblement la forme d'une gouttière de manière à bloquer radialement ledit compartiment d'analyse souple, lesdits moyens de blocage de ladite cartouche dans lesdits ascenseurs étant débrayés, ladite gouttière ayant deux parois latérales horizontales (67, 68) d'écartement calibré contre lesquelles ledit compartiment d'analyse (4) vient se plaquer au cours d'une centrifugation.

7. Dispositif selon l'une des revendications précédentes, caractérisé par le fait que ledit sachet (10) est constitué d'une feuille (2) de Surlyn thermoformée, pliée en deux et thermosoudée suivant des lignes (11) définissant lesdits compartiments et ledit canal.

8. Dispositif selon l'une des revendications précédentes, caractérisé par le fait que ledit fond (20) et son couvercle sont réunis latéralement par deux guides (31) qui les pincent entre deux lèvres.

## Patentansprüche

1. Vorrichtung zur Durchführung biologischer Analysen mittels einer chemischen Serumreaktion, dadurch gekennzeichnet, daß sie eine Vorrichtung zur gleichzeitigen Bearbeitung einer Vielzahl von Kartuschen (1) enthält, die aufweist:
- eine einem Motor mit Winkelkodierer (43) zugeordnete Nabe (41), wodurch es möglich ist, die Umdrehungszyklen zu messen und die Nabe (41) schnell zu Zentrifugierzwecken oder langsam Schritt für Schritt in Drehung zu versetzen,
- eine Vielzahl von Kartuschenträgeraufzügen (51), die radial auf der Nabe (41) befestigt sind, und Mittel, die es ermöglichen, jeden Aufzug von einer hohen Lage (51') zum Laden einer Kartusche (1) in eine tiefe Arbeitslage zu bringen, wobei jeder Aufzug eine periphere offene Seite und eine stark ausgeschnittene Oberseite sowie eine ebensolche Unterseite besitzt und jeder Aufzug entkoppelbare Mittel aufweist, um seine Kartusche beim Zentrifugieren radial zu blockieren,
- eine Vielzahl von Auswertekalibern (65), die auf der Nabe in Höhe der peripheren Seite der Aufzüge befestigt sind, und weiter dadurch gekennzeichnet, daß jede im wesentlichen rechteckförmige Kartusche (1) aufweist:
- eine weiche Tasche (10) aus Kunststoff mit drei Fächern, die je einen Reagenzstoff oder eine Verdünnungsflüssigkeit enthalten können, wobei eines dieser Fächer, Analysefach (4) genannt, einerseits mit einem freien Ende der Tasche über einen Kanal (7), der durch eine zerbrechbare Membran (15) verschlossen ist, und andererseits mit den beiden anderen Fächern zur Speicherung von Reagenzstoffen (5, 6) über je einen mit einem zerbrechbaren Verschluß versehenen Kanal (13, 12) in Verbindung steht,
- einen vorgeformten rechteckigen Boden (20) aus Kunststoff, der die Tasche aufnimmt und außerdem eine Serumspeichervertiefung (23) besitzt, wobei der Kanal (7) der Tasche (10) in diese Vertiefung (23) mündet,
- einen Deckel (21), der den Boden verschließt, aber wie dieser Boden eine Öffnung (24) besitzt, die einen großen Teil des Analysefachs sichtbar läßt,
und daß die Bearbeitungsvorrichtung mindestens einen peripheren Lesemodul (80) besitzt, der in der Bahn der Kaliber liegt, sowie einen Modul (82), der oberhalb der Bahnen der Analyse- und Reagenzstoffspeicherfächer liegt und mit Mitteln versehen ist, um die zerbrechbare Membran (15) und die zerbrechbaren Verschlüsse (12, 13) der Kanäle zu zerbrechen.

2. Vorrichtung nach Anspruch 1, dadurch gekennzeichnet, daß die Bearbeitungsvorrichtung mindestens einer Pipette zum automatischen Einfüllen von Serum in die entsprechenden Fächer der Kartuschen zugeordnet ist.

3. Vorrichtung nach einem der Ansprüche 1 bis 2, dadurch gekennzeichnet, daß die Bearbeitungsvorrichtung weiter einen Modul (101) aufweist, um eine Kartusche (1) in jeden Aufzug (51) automatisch zu laden.

4. Vorrichtung nach einem der Ansprüche 1 bis 3, dadurch gekennzeichnet, daß die Bearbeitungsvorrichtung weiter einen Modul (103) zum automatischen Entladen der Kartuschen enthält.

5. Vorrichtung nach einem der vorhergehenden Ansprüche, dadurch gekennzeichnet, daß die Bearbeitungsvorrichtung einen Modul mit Mitteln (83) aufweist, um auf das weiche Analysenfach (4) zu drücken und die darin enthaltenen Flüssigkeiten zu homogenisieren.

6. Vorrichtung nach einem der vorhergehenden Ansprüche, dadurch gekennzeichnet, daß jedes Auswertekaliber (65) ein durchscheinendes Bauteil der allgemeinen Form einer Rinne ist, so daß das weiche Analysenfach in ihm radial blockiert wird, wobei die Kartuschenblockiermittel in den Aufzügen entkoppelt sind und die Rinne zwei seitliche waagrechte Wände (67, 68) mit kalibriertem Abstand besitzt, gegen die sich das Analysefach (4) während des Zentrifugierens anlegt.

7. Vorrichtung nach einem der vorhergehenden Ansprüche, dadurch gekennzeichnet, daß die Tasche (10) aus einer wärmeverformten Folie (2) aus Surlyn besteht, die auf sich umgefaltet und entlang von Linien (11) wärmeverschweißt ist, die die Fächer und den Kanal definieren.

8. Vorrichtung nach einem der vorhergehenden Ansprüche, dadurch gekennzeichnet, daß der Boden (20) und sein Deckel seitlich durch zwei Führungsglieder (31) miteinander verbunden sind, die sie zwischen zwei Lippen einzwängen.

## Claims

1. Apparatus for performing biological analyses by chemical reaction on a serum, the apparatus being characterized in that it comprises a processing device for simultaneously processing a plurality of cartridges and comprising:
a hub (41) associated with a motor having an angle encoder (43) for controlling rotation cycles and suitable for imparting both rapid centrifuging motion to the hub (41) and also slow step-by-step motion thereto;
a plurality of cartridge-carrying lifts (51) fixed radially to the hub (41) and means for causing each of them to pass from a high, "cartridge-loading" position (51') to a low, "working" position, each of the lifts having an open peripheral face, and wide open top and bottom faces, and with each lift including declutchable means for locking its cartridge radially in position during centrifuging;
a plurality of reading gauges (65) fixed to said hub level with respective ones of the peripheral faces of said lifts;
the apparatus also being characterized in that each cartridge (1) is generally rectangular in shape and comprises:
a flexible sachet (10) of plastic material having three compartments each intended to contain a reagent or a diluant, with at least one of the compartments, referred to as an "analysis" compartment (4), being connected firstly to a free end of the sachet via a channel (7) which is closed by a fragile membrane, and secondly to the other two reagent storage compartments (5, 6) via respective ducts each including a fragile closure (13, 12);
a rectangular bottom (20) preformed in plastic material to receive said sachet and also provided with a cuvette (23) for storing serum, said channel (7) of said sachet (10) terminating in said cuvette (23);
a lid (21) for closing said bottom, and having, like said bottom, an opening (24) leaving a major portion of said analysis compartment visible;
said processing device including at least one peripheral read module (80) situated on the path of said gauges, a module (82) situated above the path of said analysis and reagent storage compartments, and provided with means for breaking said fragile membrane (15) and said fragile duct closures.

2. Apparatus according to claim 1, characterized in that said processing device is associated with at least one pipette for automatically filling serum into the corresponding cuvettes of said cartridges.

3. Apparatus according to claim 1 or 2, characterized in that said processing device further includes a module (101) for automatically loading a cartridge (1) into each lift (51).

4. Apparatusd according to any one of claims 1 to 3, characterized in that said processing device also includes a module (103) for automatically unloading the cartridges.

5. Apparatus according to any preceding claim, characterized in that said processing device includes a module provided with means (83) for bearing against said flexible analysis compartment (4) and homogenizing the liquids contained therein.

6. Apparatus according to any preceding claim, characterized in that each reading gauge (65) is constituted by a transparent part which is substantially gutter-shaped so as to block radial displacement of said flexible analysis compartment, said means for locking said cartridge in said lifts then being disengaged, said gutter having two horizontal side walls (67, 68) at a calibrated distance apart against which said analysis compartment (4) bears during centrifuging.

7. Apparatus according to any preceding claim, characterized , in that said sachet (10) is constituted by a sheet (2) of thermoformed Surlyn, folded in two and heat welded along lines (11) defining said compartments and said channel.

8. Apparatus according to any preceding claim characterized in that said bottom (20) and its lid (21) are interconnected along their sides by two guides (31) which clamp them between pairs of lips.
